# EUROPEAN PATENT APPLICATION

(11) **EP 4 653 212 A1**
(43) Date of publication of application: **26.11.2025**
(21) Application number: 24176823.3
(22) Date of filing: 20.05.2024
(51) Int. Cl.: B60H 1/34

(54) **AIR VENT ASSEMBLY**

(71) Applicant: Marelli Automotive Systems Europe plc., Llanelli, Carmarthenshire SA14 8HU (GB)
(72) Inventor: BOITCEV, Andrei, Milton Keynes, MK9 4AE (GB); PATANKAR, Kalpak, Milton Keynes, MK10 9RP (GB)
(74) Representative: Haseltine Lake Kempner LLP

(57) **Abstract**

Air vent assembly (100) for selectively permitting a flow of air through an air channel defined by the air vent assembly (100), wherein the air vent assembly (100) comprises a casing (110) comprising an inner surface (112) at least partially defining an outer boundary of the air channel, a hub assembly (200) arranged inside the casing (110), a flexible member (300) comprising a flexible sheet portion (310) being arranged between the hub assembly (200) and the outer boundary of the air channel when the flexible member (300) is in an undeformed condition, wherein the hub assembly (200) is configured to selectively deform the flexible sheet portion (310) in order to adjust an area of the air channel blocked by the flexible sheet portion (310).

## Description

### Technical Field

The present disclosure relates to an air vent assembly and is particularly, although not exclusively, concerned with an air vent assembly for a motor vehicle HVAC system.

### Background

Heating, Ventilation and Air Conditioning (HVAC) systems, such as HVAC systems provided in motor vehicles, typically comprise one or more air vents for selectively, e.g. controllably, permitting a flow of air into the space that the HVAC controls the environment within. In some arrangements, the air vent may be configured to permit a flow rate of the air and/or an air flow direction of the air passing through the air vent to be controlled.

Air vents that are controllable in order to allow the flow rate and/or the air flow direction of the air passing through the air vent to be selectively varied can be complex to design and manufacture; often including a large number of movable components. Such air vents can therefore be heavy and expensive to produce.

It is desirable to provide an air vent assembly, e.g. for an HVAC system for a motor vehicle, which addresses one of more of these problems.

### Statements of Invention

According to an aspect of the present disclosure, there is provided an air vent assembly for selectively permitting a flow of air through an air channel defined by the air vent assembly, the assembly comprising: a casing comprising an inner surface at least partially defining an outer boundary of the air channel; a hub assembly arranged inside the casing; a flexible member comprising a flexible sheet portion wherein the flexible sheet portion is arranged between the hub assembly and the outer boundary of the air channel when the flexible member is in an undeformed condition, wherein the hub assembly is configured to controllably deform the flexible sheet portion in order to adjust an area of the air channel blocked by the flexible sheet and/or a direction of air flow through the air flow channel around the hub assembly.

The hub assembly may comprise a base part and a movable part movable, e.g. slidable, relative to the base part. The movable part may be movable between a first position, in which the flexible member is substantially undeformed by the hub assembly, and a second position, in which the flexible member is deformed in order to reduce an area of the air flow channel blocked by the flexible sheet portion.

A shape of the flexible sheet portion may substantially correspond to a surface of a frustrum. The flexible sheet may have first and second edges at bases of the frustum shape. The first edge of the flexible sheet portion may be coupled to the base part. A shape of the second edge may correspond to a cross-sectional shape of the outer boundary of the air channel, e.g. when the flexible sheet portion is undeformed. The second edge of the flexible sheet portion may coupled to the movable part such that moving the movable part relative to the base part acts to pull inwardly on the second edge of the flexible sheet portion, e.g. to collapse the frustrum shape of the flexible sheet inwardly, and thereby reduce the area of the air channel blocked by the flexible sheet. The movable part may be movable in a direction corresponding to a height dimension of the frustrum shape of the flexible sheet portion. The flexible member may comprise a plurality of spoke members having first ends and second ends. The first ends of the spoke members may be coupled to the movable part of the hub assembly and the second ends of the spoke members may be coupled to the second edge of the flexible sheet. The spoke members may extend outwardly, e.g. radially outwardly relative to a central axis of the hub assembly or movable part, from the movable part to the second edge.

The hub assembly, e.g. the base part, may be pivotally mounted within the casing, e.g. within the air channel. The hub assembly and/or the flexible member may be configured, e.g. shaped, to adjust a direction in which the air flows through the air flow channel based on a pivot angle of the hub assembly relative to a principal direction in which the air flow channel extends. For example, the hub assembly, e.g. the base part of the hub assembly may have a leading edge and an outer surface extending downstream from the leading edge. The hub assembly, e.g. the leading edge and outer surface may have an aerofoil shape and./or be configured to encourage air flow through the air flow channel to follow the outer surface, thereby adjusting the direction of the air flow through the air flow channel. For example, the leading edge and outer surface may have a convex shape and air may be encouraged to follow the outer surface by virtue of the Coanda effect.

The assembly may further comprise a pin mounted on the casing, e.g. within, such as substantially centrally within, the air channel. The hub assembly, e.g. base part, may be pivotal relative to the pin about one or more axes perpendicular to the principal direction in which the air channel extends. The hub assembly, e.g. the base part, may be pivotal relative to the pin about two axes perpendicular to one another. The hub assembly, e.g. base part, may be coupled to the pin by a ball and socket joint configured to permit pivotal movement of the hub assembly, e.g. base part, relative to the pin about one or more axes. For example, the base part may comprise a socket configured to interface with a ball formed on the pin.

The hub assembly may be configured to selectively form, or open to permit a flow of air through, an inner air channel through hub assembly, e.g. through passages formed in the base part and the movable part, when the flexible member is deformed by the hub assembly, e.g. when the movable part is in the second position relative to the base part. The hub assembly may comprise a plurality of passages spaced around, e.g. circumferentially around, the ball and socket joint for forming the inner air channel. The base part may comprise one or more openings at least partially forming the inner air channel. The movable part may comprise one or more blocking portions. The blocking portions may be configured to cover or be at least partially received within the openings in the base part when the flexible member is in an undeformed condition, e.g. when the movable part is in the first position relative to the base part. Alternatively, the openings may be formed on the movable part and the blocking portions may be formed on the base part. Alternatively again, each of the base part and the moving part may comprise respective openings and blocking portions configured to block the openings formed in the other of the parts when the flexible member is in an undeformed condition, e.g. when the movable part is in the first position relative to the base part. The openings may be spaced around, e.g. circumferentially around the ball and socket joint.

One of the base part and the movable part may comprise a plurality of recesses spaced apart from one another in the direction in which the movable part moves relative to the base part, and the other comprises a projections configured to be received within one of the recesses in order to locate the movable part relative to the base part. The base part may comprise one or more groves extending in the direction in which the movable part moves relative to the base part, and wherein the other comprises one or more projections configured to be received within respective ones of the groves.

According to another aspect of the present disclosure, there is provided a method of assembling an air vent assembly, wherein the assembly comprises:
a casing comprising an inner surface at least partially defining an outer boundary of the air channel; a hub assembly arranged inside the casing;
a flexible member comprising a flexible sheet portion wherein the flexible sheet portion is arranged between the hub assembly and the outer boundary of the air channel when the flexible member is in an undeformed condition, wherein the method comprises: coupling the flexible sheet portion to the hub assembly, e.g. the base part and movable parts of the hub assembly such that moving the movable part relative to the base parts causes the flexible sheet portion to deform, e.g. in order to adjust an area of the air channel blocked by the flexible sheet; inserting the hub assembly into the casing, e.g. into a hollow tubular interior of the casing; and coupling the hub assembly to the casing, e.g. using a mechanical fastener, such as a threaded fastener.

The air vent assembly may be the above-mentioned air vent assembly.

To avoid unnecessary duplication of effort and repetition of text in the specification, certain features are described in relation to only one or several aspects or embodiments of the invention. However, it is to be understood that, where it is technically possible, features described in relation to any aspect or embodiment of the invention may also be used with any other aspect or embodiment of the invention. For example, features described in relation to the first mentioned aspect may be combined with the features of the second mentioned aspect.

### Brief Description of the Drawings

For a better understanding of the present invention, and to show more clearly how it may be carried into effect, reference will now be made, by way of example, to the accompanying drawings, in which:
Figure 1a is a front perspective view of an air vent assembly according to arrangements of the present disclosure, with a flexible member of the assembly in an undeformed configuration;
Figure 1b is a front perspective view of the air vent assembly, with the flexible member of the assembly in a deformed configuration;
Figure 2 is a front perspective exploded view of the air vent assembly;
Figure 3 is an exploded view of a hub assembly for the air vent assembly;
Figure 4a is a front view of the air vent assembly illustrating a section line through the assembly;
Figure 4b is a cross-sectional view of the air vent assembly along the section line shown in Figure 4a, with the flexible member of the assembly in the undeformed configuration;
Figure 5 is a cross-sectional view of the air vent assembly along the section line shown in Figure 4a, with the flexible member of the assembly in the deformed configuration;
Figure 6a is a front view of the air vent assembly with the hub assembly pivoted relative to the casing, the view illustrating a section line through the assembly;
Figure 6b is a cross-sectional view of the air vent assembly along the section line shown in Figure 6a;
Figure 7 is a partial sectional view at a leading edge of a base part of the hub assembly;
Figures 8a and 8b are front views of an alternative flexible member for the air vent assembly in undeformed and deformed conditions respectively;
Figures 9a and 9b are front views of an alternative flexible member for the air vent assembly in undeformed and deformed conditions respectively;
Figures 10a and 10b are front views of an alternative flexible member for the air vent assembly in undeformed and deformed conditions respectively;
Figures 11a and 11b are front views of an alternative flexible member for the air vent assembly in undeformed and deformed conditions respectively;
Figure 12 is a flow chart illustrating a method of assembling an air vent assembly according to arrangements of the present disclosure.

### Detailed Description

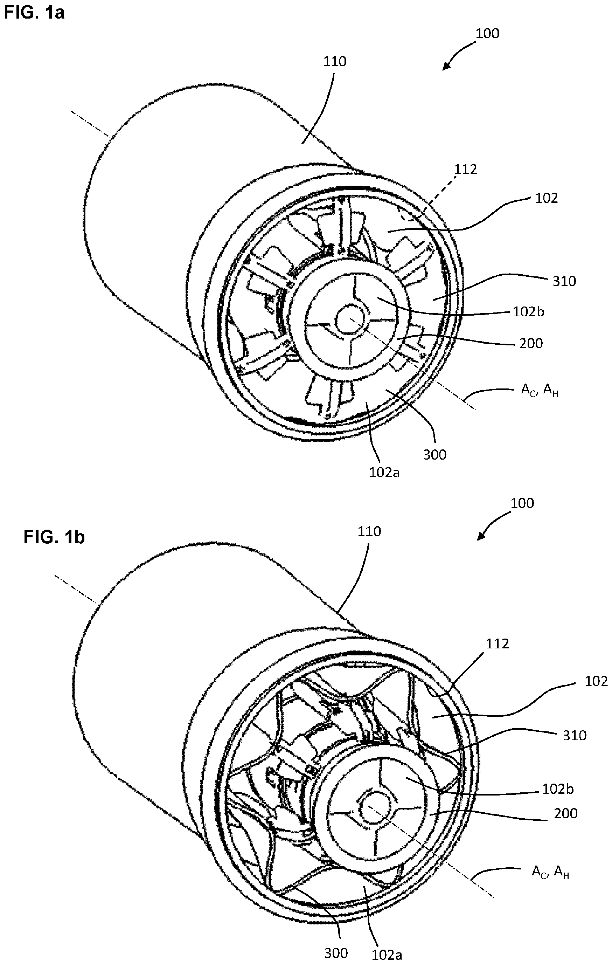

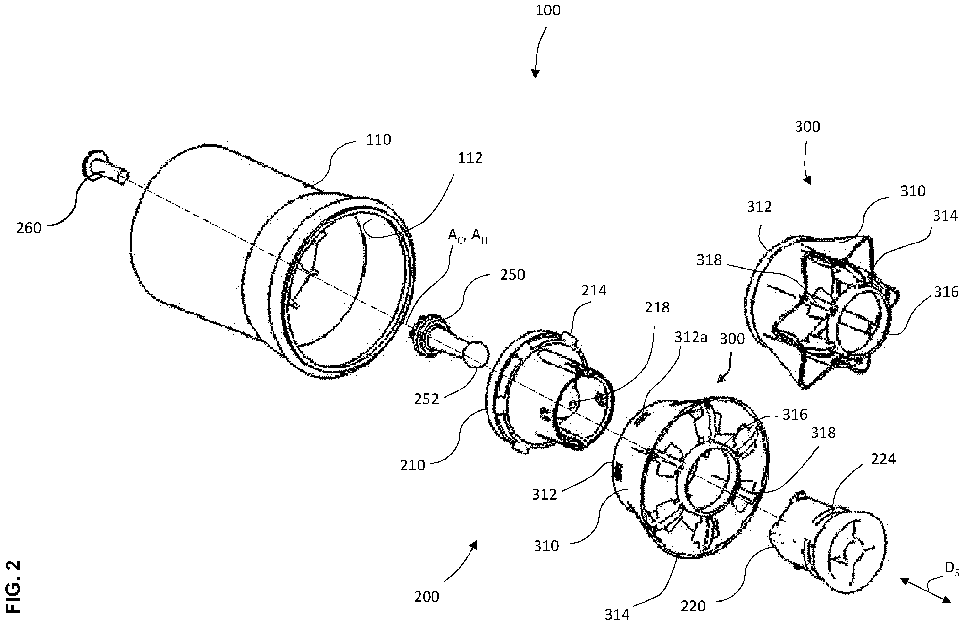

With reference to Figures 1a, 1b and 2, an air vent assembly 100 according to arrangements of the present disclosure will now be described. The air vent assembly is for selectively, e.g. controllably, permitting a flow of air through an air channel 102 defined by the air vent assembly. In some arrangements, the air vent assembly 100 may be for selectively, e.g. controllably, adjusting a direction of the flow of air through the air channel 102 and/or of the air emitted from the air vent assembly. The air vent assembly 100 may be provided as part of an HVAC system for controlling a flow of air into a space that the HVAC system controls the environment within. For example, the air vent assembly may be for an automotive HVAC system to be provided within a motor vehicle for controlling the environment within an interior of the motor vehicle. The air vent assembly may be provided at an outlet end of an air duct of the HVAC system, e.g. to form an air outlet of the HVAC system.

The air vent assembly 100 comprises a casing 110, a hub assembly 200, and a flexible member 300. The casing 110 may be substantially tubular. As depicted, the casing may form a substantially cylindrical tube. However, in other arrangements the casing may have any other shape. In some arrangements, an exterior shape of the casing may be different from the interior shape. For example, the interior shape of the casing may be circular, and the exterior shape may be square, or another shape. The casing 110 may be configured to couple to a trim portion of a motor vehicle, e.g. at an outlet end of an air duct for an HVAC system of the motor vehicle, and the exterior shape of the casing 110 may be configured to facilitate coupling of the casing to the trim portion.

The shape of the casing 110, e.g. the interior and/or exterior shape, may define a central axis Ac of the tubular shape. The tubular shape of the casing 110 may substantially surround the air channel 102 defined by the air vent assembly. In other words, the air channel 102 may extend though the hollow interior of the casing 110. The casing 110 comprises an interior surface 112, e.g. an inner tubular surface of the casing, which at least partially defines an outer boundary, e.g. a radially outer boundary, of the air channel 102. The air channel may extend through the casing in a principal direction, which may be parallel, or aligned with the central axis A_{C} of the casings tubular shape.

The hub assembly 200 is arranged at least partially inside the casing, e.g. inside the hollow interior of the casing. The hub assembly 200 may be arranged inside the tubular interior of the casing, and may be arranged substantially centrally within the hollow interior of the casing, e.g. relative to the central axis of the casing. The hub assembly may be at least partially aligned with the central axis A_{C} of the casing. For example, a central axis A_{H} of the hub assembly may be aligned within the central axis A_{C} of the casing. As depicted, the hub assembly 200 may be approximately, e.g. substantially, prism shaped, such as cylindrical. In other arrangements, the hub assembly 200 may be approximately, e.g. substantially, any other regular or irregular prism shape. For example, a cross-sectional shape of the hub assembly, e.g. in a plane perpendicular to the central axis A_{H,} may correspond to a cross-sectional shape of the interior surface 112 of the casing. Alternatively, the cross-sectional shape of the hub assembly may be different from a cross-sectional shape of the interior surface of the casing. For example, the hub assembly may be substantially circular in cross-section and the interior surface of the casing may be substantially square, triangular, pentagonal or any other regular or irregular polygonal shape. As described in greater detail below, the hub assembly 200 may define one or more inner air channels 102b extending though the hub assembly. The inner air channels 102b may be arranged inside the air channel 102 formed by the casing assembly.

The flexible member 300 comprises a flexible sheet portion, or membrane 310. The flexible sheet portion is configured to extend between the hub assembly 200 and the inner surface 112 of the casing 110 about the hub assembly, when the flexible member is in an undeformed condition, in order to substantially block or restrict the flow of air through the portion of the air flow channel 102 between, e.g. radially between, the hub assembly 200 and the inner surface 112 of the casing (e.g. the outer boundary of the air flow channel). The portion of the air flow channel 102 between, e.g. radially between, the hub assembly and the surface 112 may be referred to as the outer air flow channel 102a. The flexible sheet 310 may extend around, e.g. completely (360°) around, the hub assembly, and hence, around the outer air flow channel 102a. Accordingly, the flexible sheet 310 may block or restrict the flow of air through the outer air flow channel around, e.g. completely (360°) around the hub assembly, when the flexible member 300 is in an undeformed condition.

As illustrated, the flexible member 300 may be deformed from the undeformed condition, depicted in Figure 1a, to a deformed condition, depicted in Figure 1b, in which the flexible sheet is deformed, e.g. at least partially collapsed, so that a smaller area of the air flow channel 102, e.g. the outer air flow channel 102a, is blocked by the flexible sheet 310. Both conditions of the flexible member 300 are illustrated side-by-side in Figure 2. As described in greater detail below, the hub assembly 200 may be configured to selectively, e.g. controllably, deform the flexible member 300, and thus the flexible sheet 310, between the undeformed condition and the deformed condition.

The configuration of the air vent assembly 100 depicted in Figure 1a, in which the flexible member 300 is substantially undeformed, may be referred to as a closed configuration of the air vent assembly. When the flexible member 300 is deformed by the hub assembly 200, such that the area of the air flow channel 102 blocked by the flexible sheet 310 is reduced compared to in the closed configuration, e.g. as depicted in Figure 1b, this may be referred to as an open configuration of the air vent assembly.

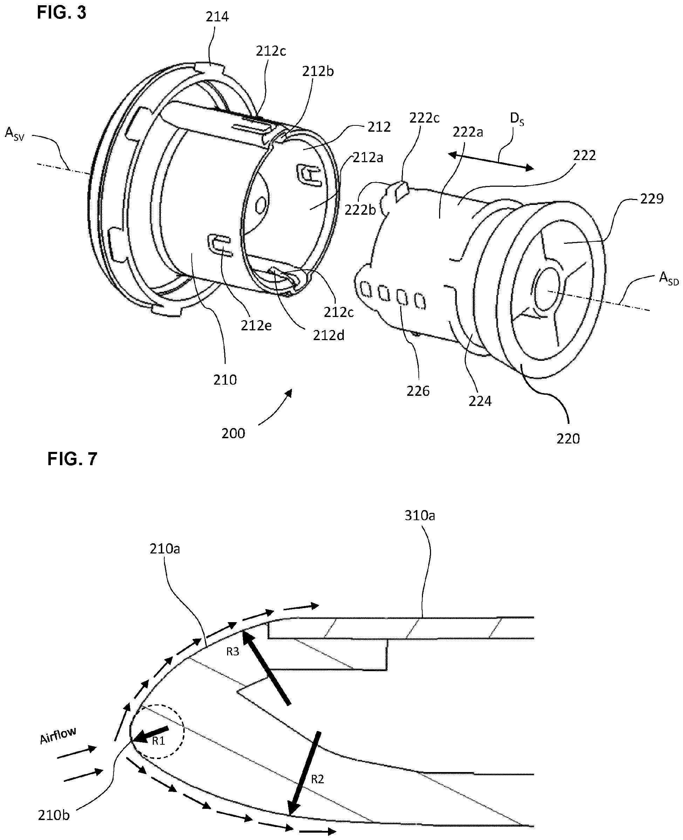

Referring to Figures 2 and 3, the hub assembly 200 comprises a base part 210 and a movable part 220, which is movable relative to the base part 210. In particular, the movable part 220 may be slidable relative to the base part 210. The movable part 220 may be slidable relative to the base part in a sliding direction D_{S}.

As depicted, the base part 210 may comprise a sleeve portion 212 and the movable part may comprise a slider portion 222 configured to be at least partially received inside of the sleeve portion 212. Sliding movement of the movable part 220 relative to the base part 210 may be supported by engagement between an internal surface 212a of the sleeve portion and the outer surface 222a of the slider portion. In the arrangement shown, the internal surface 212a of the sleeve portion and the outer surface 222a of the slider portion are circular in cross-section. However, in other arrangements the internal surface 212a of the sleeve portion and the outer surface 222a of the slider portion may be any other shape. Further, in other arrangements, the movable part 220 may comprise the sleeve portion and the base part 210 may comprise the sliding portion configured to be received inside the sleeve portion of the movable part.

As illustrated, the sleeve portion 212 may comprise one or more recesses 212b formed in the internal surface 212a of the sleeve portion an extending along the sleeve portion in the sliding direction D_{S}. The slider portion 222 may comprise one or more, e.g. a corresponding number of, projections 222b configured to be received in the recesses in the sleeve portion for guiding the sliding movement of the sleeve portion. The projections may project outwardly, e.g. in a radial direction, from the outer surface 222a. In other arrangements, the recesses may be formed in the slider portion 222 and the projections may be formed on the sleeve portion 212. Engagement between the projections 222b and the recesses 212b may restrict movement of the sliding portion relative to the sleeve portion other than in the sliding direction Ds. For example, engagement between the projections and the recesses may restrict pivoting and/or rotating of the slider portion 222 relative to the sleeve portion 212, e.g. about an axis parallel with the sliding direction Ds.

The recesses 212b may comprise, e.g. each comprise, a retaining portion 212c comprising a resiliently deformable projection configured to engage the projections 222b on the sliding portion to prevent or restrict the projections from moving out of the recesses 212b in the sliding direction. As depicted, the retaining portion 212c may be formed by an elongate portion of the wall of the sleeve portion at a bottom of the recess 212b, which is disconnected from adjacent portions of the wall around 3 of its edges and connected to an adjacent portion of the wall along 1 of its edges. The retaining portion 212c may be resiliently deformable by virtue of the connection along the 1 of its edges and the resilient nature of the material of the sleeve portion 212. The retaining portion 212c may comprise a ramp surface 212d and the projections 222b may comprise a complementary ramp surface 222c configured to engage the ramp surface when the sliding portion is inserted into the sleeve portion, e.g. during assembly of the hub assembly 200, and urge the retaining portions to deform to allow the retaining portions to be received within the recesses, e.g. respectively.

The sleeve portion 212 may comprise a longitudinal axis Aᵥ, which may be parallel with the internal surface 212a of the sleeve portion. When the sliding portion is received within the sleeve portion, the longitudinal axis of the sleeve may be aligned with a longitudinal axis A_{L} of the sliding portion, which may be parallel with the outer surface of the sliding portion. The movable part 220 may move relative to the base part 210 in a direction parallel with the longitudinal axes A_{S}, A_{L} of the slider portion and/or the sleeve portion. In other words, the sliding direction D_{S} may be parallel with the longitudinal axis of the internal surface of the sleeve portion and/or the outer surface of the sliding portion.

As illustrated in Figure 2, a shape of the flexible sheet portion 310 of the flexible member may correspond to the outer surface of a frustrum or cone (i.e. a circular frustrum). The flexible sheet portion may comprise first and second edges 312, 314 at first and second bases of the frustrum shape. The first edge 312 may be shorter that the second edge 314. Accordingly, an area of a cross-section of the frustum shape defined by the flexible sheet portion may be smaller at the first edge than at the second edge.

The flexible sheet portion 310 may be coupled to the base part 210 of the hub assembly at the first edge 312, e.g. at one or more locations, or continuously around the first edge. As depicted, the flexible sheet portion 310 may comprise a plurality of openings 312a spaced around the first edge 312, and the base part of the hub assembly may comprise a plurality, e.g. a corresponding number, of projections 214 spaced circumferentially around the base part for coupling to respective ones of the openings 312a in the flexible sheet portion. When the flexible member 300 is coupled to the base part 210 around the first edge 312 of the flexible sheet portion, a height direction of the frustum shape defined by the flexible sheet portion may be parallel, or aligned, with the sliding direction Ds in which the movable part 220 moves relative to the base part 210 of the hub assembly.

Due to the frustrum shape of the flexible sheet portion 310, the second edge 314 of the flexible sheet portion may be arrangeable adjacent to, or in contact with, the inner surface 112 of the casing, which forms the outer boundary of the air flow channel. Further, a shape of the second edge 314 in a plane perpendicular to the height direction of the frustum shape may correspond to a cross-sectional shape of the inner surface 112 of the casing, e.g. in a plane perpendicular to a longitudinal direction of the casing, when the flexible member is in an undeformed condition. In this way, the flexible sheet portion 310 may block or restrict the flow of air through the air channel between the hub assembly and the surface of the casing, e.g. through the outer air flow channel 102a.

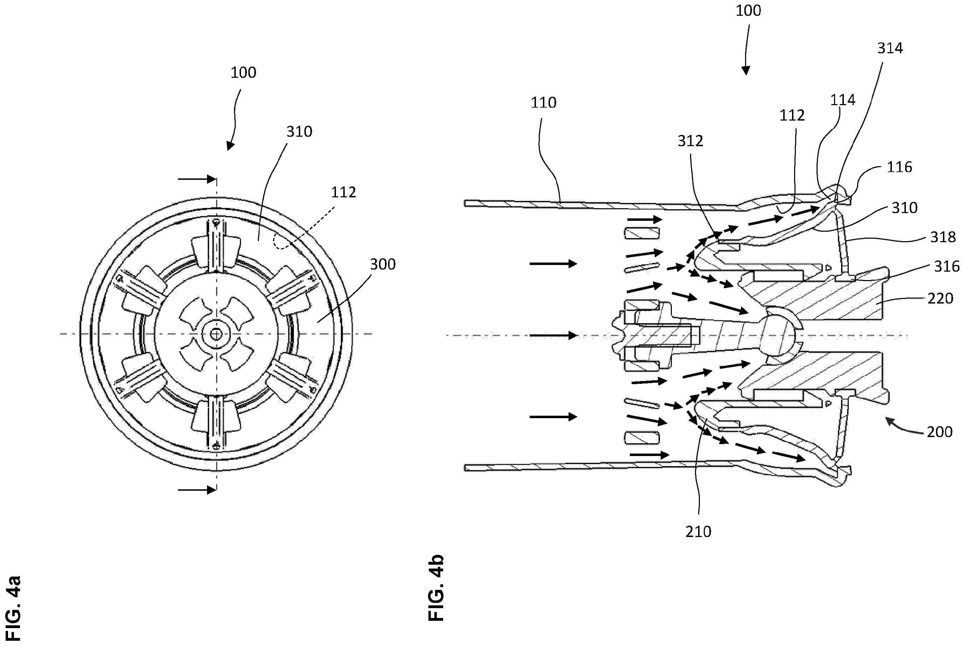

Referring briefly to Figures 4a and 4b, in some arrangements, the casing 110 may comprise a circumferential recess 114 formed around, e.g. completely (360°) around, the inner surface 112. When the flexible member 300 is in an undeformed condition, the second edge 314 of the flexible sheet portion may be received within the circumferential recess 114. Additionally or alternatively, the casing 110 may comprise a lip 116 projecting inwardly from the inner surface 112. The lip may project inwardly at a downstream edge of the recess 114 (relative to the flow of air though the air flow channel). Additionally or alternatively, the lip 116 may be arranged downstream, e.g. immediately downstream, of the second edge 314 of the flexible sheet portion 310 and may overlap the second edge 314 of the flexible sheet portion in a radial direction of the casing (relative to the central axis Ac of the casing). The flexible sheet portion 310 may be configured to abut the lip 116, e.g. a downstream side of the lip. The presence of the recess 114 and/or lip 116 may improve sealing of the air flow channel between the casing and the flexible member 300, e.g. the flexible sheet portion 310, when the flexible member is in an undeformed condition.

Returning to Figure 2, the flexible member 300 may further comprise a collar portion 316 and a plurality of spoke members 318 extending outwardly from the collar portion to the flexible sheet portion 310. In particular, first ends 318a of the plurality of spokes may be coupled to the collar portion 316 and second ends 318b of the plurality of spokes may be coupled to the flexible sheet portion 310. The spoke members 318 may be coupled to the flexible sheet portion at or close to the second edge 314 of the flexible sheet portion.

As illustrated, when the flexible member 300 is in an undeformed condition, the collar portion 316 may be at least partially, e.g. substantially, aligned with the second edge 314 of the flexible sheet portion in the height direction of the frustrum shape defined by the flexible sheet portion. The collar portion 316 may extend around the movable part 220 of the hub assembly, and the flexible member 300 may be coupled to the movable part at the collar portion. For example, the collar portion may be coupled to the movable part at one or more locations, or continuously, around the movable part. In some arrangements, the movable part may comprise a groove 224 extending at least partially around the movable part for receiving at least part of the collar portion. Additionally or alternatively, the movable part may comprise a poke-yoke feature, such as a projection, configured to interface with a complementary poke-yoke feature formed on the collar portion for locating the collar portion relative to the movable part, e.g. in a direction about an axis parallel with the sliding direction Ds of the movable part, the height direction of the shape of the flexible sheet portion and/or the central axis of the hub assembly/movable part.

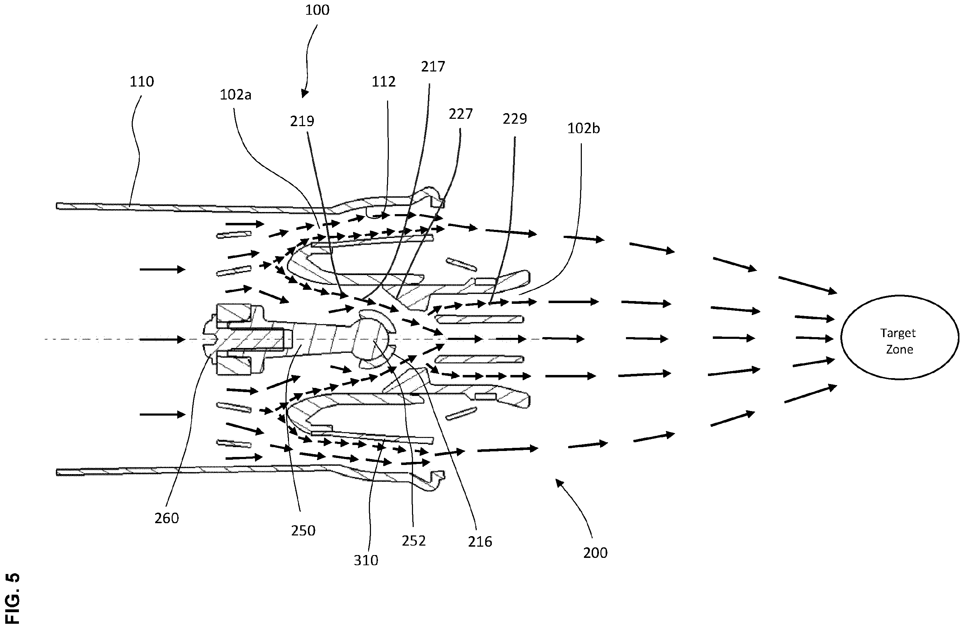

The movable part 220 may be moved relative to the base part 210 between a first position, illustrated in Figure 4b, and a second position, illustrated in Figure 5. As shown in Figures 1b, 2 and 5, when the movable part 220 is moved relative to the base part 210 in the sliding direction, e.g. into the second position, the movable part 220 may move the collar portion 316 in the height direction. As the first edge 312 of the flexible sheet portion, is coupled to the base part 210 of the hub assembly, the movement of the collar portion 316 may be relative to the first edge 312, e.g. away from and towards the first edge. Movement of the movable part 220 may cause the spoke members 218 to pull on the flexible sheet portion 310 at the second edge and deform, e.g. collapse, the flexible sheet portion inwardly towards the central axis of the hub assembly A_{H} and/or the collar, e.g. at the locations at which the spoke members 218 are coupled to the flexible sheet portion 310.

As illustrated, portions of the air flow channel 112, e.g. the outer air flow channel 112a, where the flexible sheet portion 310 is deformed, e.g. collapse inward, may no longer be blocked by the flexible sheet portion, thereby permitting a flow of air through the air flow channel past the deformed/collapsed parts of the flexible sheet portion. An extent to which the flexible sheet portion is deformed may be based on the amount that the spoke members are caused to move the second edge 314 inwardly, due to the sliding movement of the movable part and corresponding movement of the collar portion. Accordingly, an unblocked/unrestricted flow area of the air flow channel, e.g. the outer air flow channel, may be varied based on the movement, e.g. distance of movement, of the movable part 220 of the hub assembly, e.g. relative to the base part 210, in the sliding direction Ds.

As illustrated in Figure 3, the moveable part may comprise a plurality of recesses or grooves 226 formed in the outer surface of the movable part, e.g. on the outer surface 222a of the slider portion 222. The grooves 226 may be in a group of grooves spaced apart from one another in the sliding direction D_{S} of the movable part. The base part 210 of the hub assembly 200 may comprise a resiliently deformable projection 212e configured to be received within different ones of the grooves based on a displacement of the movable part 220 relative to the base part in the sliding direction D_{S}. The resiliently deformable projection 212e may be biased to move into the grooves by virtue of its resilience. Engagement between the resiliently deformable projection and the grooves may act to locate the movable part 220 relative to the base part 210, resist movement of the movable part relative to the base part in the sliding direction, and/or provide haptic feedback to a user as the movable part moves relative to the base part.

As depicted, the resiliently deformable projection 212e may be formed by an elongate portion of the wall of the sleeve portion 212, which is disconnected from adjacent portions of the wall around 3 of its edges and connected to an adjacent portion of the wall along 1 of its edges. The resiliently deformable projection 212e may be resiliently deformable by virtue of the connection along the 1 of its edges and the resilient nature of the material of the sleeve portion. The base part may comprise a plurality, e.g. two, of the resiliently deformable projections 212e spaced around, e.g. circumferentially around, the base part, and the movable part may comprise a plurality, e.g. corresponding number, of groups of the grooves 226 spaced around, e.g. circumferentially around, the movable part, e.g. by a corresponding angle/distance. In other arrangements, the resiliently deformable projection(s) may be formed on the movable part and the grooves, or groups of grooves, may be formed on the base part.

The air vent assembly 100 may further comprise a pin 250. The pin 250 may be coupled, e.g. fixedly coupled, to the casing. In particular, the pin may be mounted on the casing 110 substantially centrally in the air flow channel 112. As illustrated in Figure 2, the pin 250 may be coupled to the casing 110 using a mechanical fastener 260, such as a threaded fastener, which passes through an opening in the casing to be received within a threaded bore formed in the pin.

The hub assembly 200 may be coupled, e.g. pivotally coupled, to the pin 250. The hub assembly 200 may be coupled to the pin 250 so as to be pivotable relative to the pin about two axes, e.g. perpendicular axes, simultaneously. For example, the hub assembly 200 may be coupled to the pin 250 by a ball and socket joint. Alternatively the hub assembly may be coupled to the pin by any other joint which enables pivotal movement of the hub assembly 200 relative to the pin 250 about one or more, e.g. two, axes. In the arrangement depicted, the pin 250 comprises a ball 252 of the ball and socket joint and the hub assembly, e.g. the base part 210, comprises a socket 218 of the ball and socket joint. However, in other arrangements the pin 250 may comprise the socket and the ball may be formed on the hub assembly 200, e.g. the base part. The ball and socket joint may be arranged substantially centrally within the air flow channel 112.

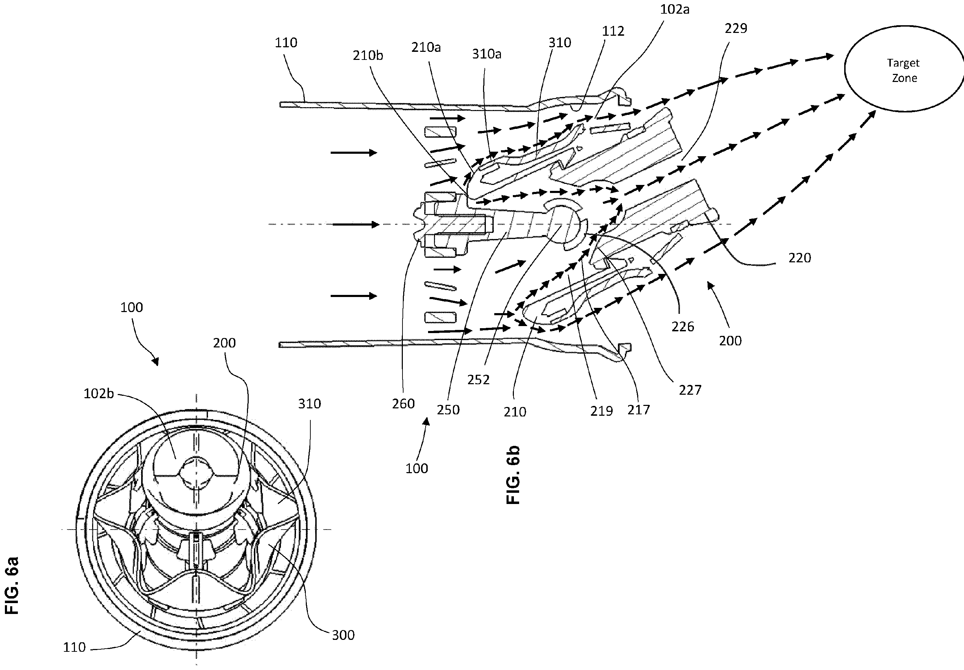

With reference to Figures 6a and 6b, the hub assembly 200 may be pivoted relative to the pin (and hence, the casing 110) in order to adjust a direction in which the air flows through at least part of the air flow channel 102 and/or is emitted by the air vent assembly 100. As illustrated, the hub assembly 200, e.g. the base part 210, may comprise an outer surface 210a, which forms part of an inner boundary of the air flow channel, e.g. the outer air flow channel 102a.

Additionally or alternatively, an outer surface 310a of the flexible sheet portion of the flexible member may define at least part, e.g. a length of, the inner boundary of the air flow channel, e.g. the outer air flow channel 102a. When the flexible member 300 is in a deformed condition, an orientation of the flexible sheet portion within the air flow channel 102 may vary as the orientation of the hub assembly 200 is varied. Accordingly, when the hub assembly 200 is pivoted relative to the pin 250, a direction of the inner boundary of the air flow channel, e.g. the outer air flow channel, may vary in the same manner as the orientation of the hub assembly is varied. The direction of the inner boundary of the air flow channel, e.g. the outer air flow channel, may therefore vary anti-symmetrically relative to the casing, which may act to direct the flow of air though the air channel 102, e.g. the outer air channel 102a, in a particular direction according to the orientation of the outer surface 210a of the hub assembly and/or the outer surface of the flexible sheet portion 310a, e.g. parallel or substantially parallel with the orientation of the outer surface 210a of the hub assembly and/or the outer surface of the flexible sheet portion 310a.

One or more inner air flow channels 102b of the air vent assembly may be formed though the hub assembly 200. In particular, the inner air flow channels 102b may be formed by one or more passages 219, 229 extending though the base part and hub part. A direction of the air flow though the inner air flow channels 102b and/or emitted from the inner air flow channels may substantially correspond to the orientation of the hub assembly 200. Accordingly, when the hub assembly 200 is pivoted relative to the pin 250, a direction of the air flow though and/or emitted by the inner air flow channels 102b may be varied accordingly.

In some arrangements, the air within the air flow channel 102, e.g. the outer air flow channel 102a and/or the inner air flow channels 102b, may be caused to flow in a selected direction at least partially by virtue of the Coanda effect causing the flow of air through the air channel to follow the direction of the outer surface of the hub assembly and/or the flexible member 210a, 310a. As mentioned above, the outer air flow channel 102a may be at least partially formed by the outer surface 210a of the base part. The outer surface of the base part may extend from a leading edge 210b of the base part, which may be a leading edge of the hub assembly. As depicted in Figure 7, the base part 210 may have an aerofoil shape in cross-section for at least a length of the base part extending downstream from the leading edge 210b of the base part. The base part 210 may have a convex shape at the leading edge 210b of the base part and along the outer surface 210a, e.g. up to the flexible member 300. In some arrangements, the flexible member 300, e.g. the flexible sheet portion 310, may have a convex shape over at least a length of its outer surface 310a extending downstream from the outer surface 210a of the base part. The convex shape of the base part 210 may encourage the flow of air within the air flow channel to follow the outer surface 210a of the base part, e.g. by virtue of the Coanda effect, so that the air flow direction is controllable based on the orientation of the base part. As illustrated in Figure 7, the base part may further comprise an inner surface 210c extending downstream from the leading edge 210b and at least partially forming the passage 219 through the base part. The inner surface 210c may similarly have a convex shape, which may encourage the flow of air through the inner air flow channel to follow the direction of the passage 219 through the base part.

As mentioned above, the base part 210 may be coupled to the pin 250 by virtue of a ball and socket joint comprising a socket 218 formed on the base part and a ball 252 formed on the pin 250. As illustrated in Figures 3, 4b and 5, the base part may comprise a shell portion 216 and the socket may be formed inside the shell portion. The one or more passages 219 extending through the base part for forming the inner air flow channel 102b may pass around the shell portion 216. The base part may comprise one or more openings 217 spaced circumferentially around the socket, and optionally around the shell. The one or more openings 217 may at least partially form the one or more inner air flow channels 102b.

The hub assembly 200 may be configured to selectively open and close the inner air flow channels, e.g. when the movable part 220 moves relative to the base part 210. As depicted in Figure 4a, when the movable part is in the first position, the inner air flow channels 102b may be closed or substantially blocked. In other words, the flow of air through the inner air flow channels may be restricted when the movable part 220 is in the first position. As illustrated, the movable part 220 may comprise one or more passage blocking portions 227 configured to be received within respective ones of the openings 217 that are spaced circumferentially around the socket, e.g. when the movable part is in the first position, in order to block the passages 219 at the openings, and thereby block or restrict the flow of air through the inner air flow channels 102b.

As the movable part is moved into the second position, the passage blocking portions 227 may move out of the openings 217 to permit a flow of air through the inner air channels 102b. As depicted in Figure 4b, when the movable part is in the second position, the passage blocking portions 227 may be spaced apart from the openings 217 around the socket, so that the passages 219 in the base part 210 are not blocked at the openings 217. The movable part 220 comprises the one or more passages 229 which extend through the movable part to form the inner air flow channels through the movable part. The passages 229 in the movable part 220 are in fluid communication with the passages 219 in the based part. The passages 229 in the movable part may be arranged circumferentially between the passage blocking portions 227. Accordingly, as depicted in Figure 4b. when the movable part 220 is in the second position, the inner air flow channels 102b may be formed through the hub assembly 200. As mentioned above, and depicted in Figure 6b, an orientation of the inner air flow channels 102b may be determined by the orientation of the hub assembly 200. Hence, when the hub assembly is pivoted relative to the casing 110, the direction of the flow of air through and/or omitted by the inner air channels may be controlled accordingly.

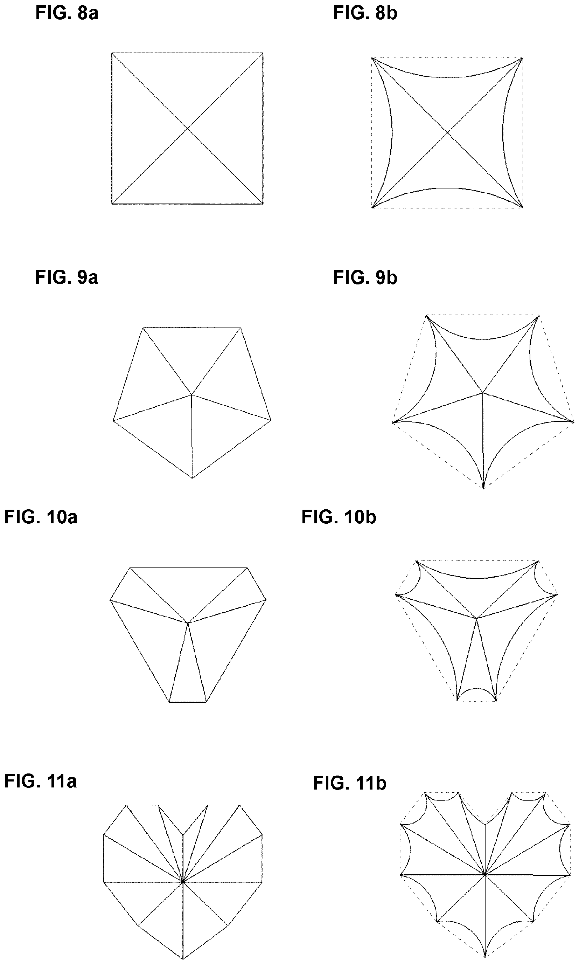

Although in the arrangements described above, the casing 110, e.g. the inner surface 112 of the casing, is substantially circular, in other arrangements the inner surface of the casing may be any other shape. A shape of the flexible member, e.g. at least the second edge 314 of the flexible sheet portion of the flexible member may correspond to the shape of the inner surface of the casing, so that the flexible member can block or restrict the flow of air through the air channel up to the inner surface of the casing. Accordingly, and with reference to Figures 8a, 8b, 9a, 9b, 10a, 10b, and 11a and 11b the flexible member, e.g. the flexible sheet portion of the flexible member many have any desirable shape. As depicted, the depicted in Figures 8a, 8b, 8c, 8d, the shape of the flexible sheet portion, e.g. the second edge of the flexible sheet portion may have a number of vertices and the spokes of the flexible member may be coupled to the flexible sheet portion at positions between the vertices. A shape of the flexible member in the collapsed condition may be determined based on the number and position of the spokes.

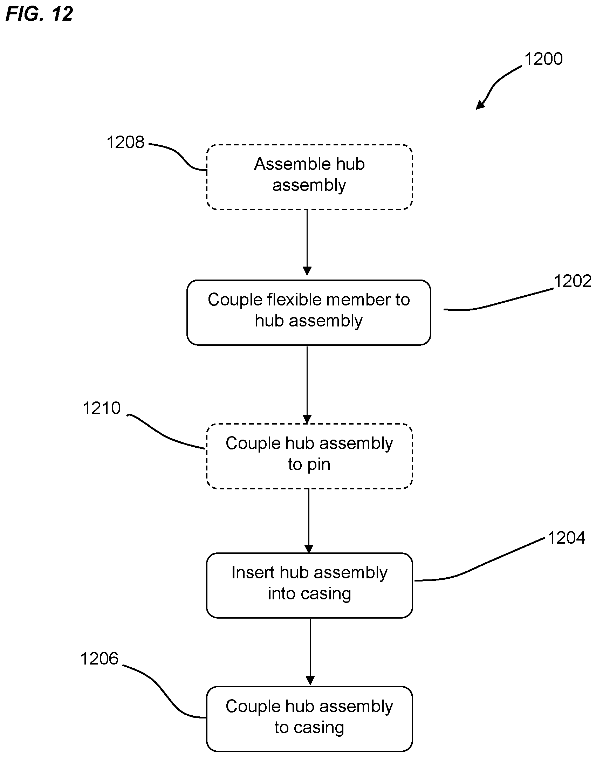

With reference to Figure 12, a method 1200 of assembling an air vent assembly, such as the air vent assembly 100 described above, will now be described. The method comprises a first step, in which the flexible member 300 is coupled to the hub assembly. In particular, the flexible sheet portion, e.g. the first edge, may be coupled to the base part and the collar, or other portion, may be coupled to the movable part of the hub assembly. In this way movement of the movable part relative to the base part may cause the flexible sheet portion to deform, e.g. in order to adjust an area of the air channel blocked by the flexible sheet.

The method may comprise a second step 1204, in which the hub assembly is inserted into the casing, e.g. into a hollow tubular interior of the casing. The second step 1204 may be performed after the first step so that the flexible member is inserted into the casing together with the hub assembly. The hub assembly may be inserted such that the second edge of the flexible sheet portion abut the inner surface of the casing, is receive within a recess formed in the casing and/or behind an inwardly projecting lip formed in the casing, so that the air flow channel is blocked or restricted by the flexible sheet portion (in the undeformed condition).

The method may comprise a third step 1206, in which, the hub assembly is coupled, e.g. fixedly coupled, to the casing. The hub assembly may be coupled to the casing using a mechanical fastener, such as a threaded fastener.

The method may comprise a hub assembly step 1208, in which the base part and the movable part of the hub assembly are assembly together. For example, a sliding portion of one of the base part and the movable part is inserted into a sleeve portion formed on the other of the base part and the movable part. Further, a projection formed on one of the sliding portion and the sleeve portion may be inserted into a recess formed in the other of the sliding portion and the sleeve portion and extending in a sliding direction of the movable part relative to the base part, e.g. as described above. The method 1200 may comprise a pin attachment step, in which the hub assembly is coupled to a pin. The pin may be coupled, e.g. fixedly coupled, to the casing. In other words, the hub assembly may be coupled to the casing via the pin. The hub assembly may be coupled to the pin by a ball and socket joint, e.g. having the features described above.

As mentioned above, the shape, e.g. cross-sectional shape, of the hub assembly, e.g. the base part and/or the movable part, may be different from the shape of the casing, e.g. the inner surface of the casing. The shape of the first edge of the flexible sheet portion and the collar portion may correspond to the shape of the hub assembly, e.g. the base part and movable part respectively. The shape of the flexible sheet portion, e.g. a cross-sectional shape in a plane perpendicular to the height direction of the frustrum shape of the flexible sheet portion, may vary between the first edge and the second edge.

## Claims

1. An air vent assembly for selectively permitting a flow of air through an air channel defined by the air vent assembly, the assembly comprising:
a casing comprising an inner surface at least partially defining an outer boundary of the air channel;
a hub assembly arranged inside the casing;
a flexible member comprising a flexible sheet portion wherein the flexible sheet portion is arranged between the hub assembly and the outer boundary of the air channel when the flexible member is in an undeformed condition, wherein the hub assembly is configured to controllably deform the flexible sheet portion in order to adjust an area of the air channel blocked by the flexible sheet and/or a direction of air flow through the air flow channel around the hub assembly.

2. The air vent assembly of claim 1, wherein the hub assembly comprises a base part and a movable part movable, e.g. slidable, relative to the base part, wherein the movable part is movable between a first position, in which the flexible member is substantially undeformed by the hub assembly, and a second position, in which the flexible member is deformed in order to reduce an area of the air flow channel blocked by the flexible sheet portion.

3. The air vent assembly of claim 2, wherein a shape of the flexible sheet portion substantially corresponds to a surface of a frustrum, wherein the flexible sheet has first and second edges at bases of the frustum shape, wherein the first edge of the flexible sheet portion is coupled to the base part and the second edge of the flexible sheet portion is coupled to the movable part such that moving the movable part relative to the base part acts to pull inwardly on the second edge of the flexible sheet portion, e.g. to collapse the frustrum shape of the flexible sheet inwardly, and thereby reduce the area of the air channel blocked by the flexible sheet.

4. The air vent assembly of claim 3, wherein the movable part is movable in a direction corresponding to a height dimension of the frustrum shape of the flexible sheet portion.

5. The air vent assembly of claim 3 or 4, wherein the flexible member comprises a plurality of spoke members having first ends and second ends, wherein the first ends of the spoke members are coupled to the movable part of the hub assembly and the second ends of the spoke members are coupled to the second edge of the flexible sheet.

6. The air vent assembly of any of claims 3 to 5, wherein a shape of the second edge corresponds to a cross-sectional shape of the outer boundary of the air channel, e.g. when the flexible sheet portion is undeformed.

7. The air vent assembly of any of the preceding claims, wherein the hub assembly, e.g. the base part, is pivotally mounted within the casing, e.g. within the air channel.

8. The air vent assembly of any of the preceding claims, wherein the hub assembly and/or the flexible member are configured, e.g. shaped, to adjust a direction in which the air flows through the air flow channel based on a pivot angle of the hub assembly relative to a principal direction in which the air flow channel extends.

9. The air vent assembly of claim 8, wherein the assembly further comprises a pin mounted on the casing, e.g. within, such as substantially centrally within the air channel, wherein the hub assembly, e.g. base part, is pivotal relative to the pin about one or more axes perpendicular to the principal direction in which the air channel extends.

10. The air vent assembly of claim 9, wherein the hub assembly, e.g. base part, is coupled to the pin by a ball and socket joint configured to permit pivotal movement of the hub assembly, e.g. base part, relative to the pin about one or more axes.

11. The air vent assembly of any of the preceding claims, wherein the hub assembly is configured to selectively form an inner air channel through hub assembly, e.g. through passaged formed in the base part and the movable part, when the flexible member is deformed by the hub assembly, e.g. when the movable part is in the second position relative to the base part.

12. The air vent assembly of claims 10 and 11, wherein the hub assembly comprises a plurality of passages spaced around, e.g. circumferentially around, the ball and socket joint for forming the inner air channel.

13. The air vent assembly of claim 11 or 12 when depending on claim 2, wherein the base part comprises one or more openings at least partially forming the inner air channel, wherein the movable part comprises one or more blocking portions, and wherein the blocking portions are configured to cover or be at least partially received within the openings in the base part when the flexible member is in an undeformed condition, e.g. when the movable part is in the first position relative to the base part.

14. The air vent assembly of any of claims 2 to 13, wherein one of the base part and the movable part comprises a plurality of recesses spaced apart from one another in the direction in which the movable part moves relative to the base part, and the other comprises a projections configured to be received within one of the recesses in order to locate the movable part relative to the base part.

15. The air vent assembly of any of claims 2 to 14, wherein the base part comprises one or more groves extending in the direction in which the movable part moves relative to the base part, and wherein the other comprises one or more projections configured to be received within respective ones of the groves.

## Amended claims

### Amended claims in accordance with Rule 137(2) EPC.

1. An air vent assembly (100) for selectively permitting a flow of air through an air channel (102) defined by the air vent assembly, the assembly comprising:
a casing (110) comprising an inner surface (112) at least partially defining an outer boundary of the air channel;
a hub assembly (200) arranged inside the casing;
a flexible member (300) comprising a flexible sheet portion (310) wherein the flexible sheet portion (31010a) is thereby arranged between the hub assembly (200) and the outer boundary of the air channel when the flexible member is in an undeformed condition, wherein the hub assembly is configured to controllably deform the flexible sheet portion in order to adjust an area of the air channel blocked by the flexible sheet and/or a direction of an air flow through the air channel around the hub assembly, wherein the hub assembly comprises a base part (210) and a movable part (220) movable relative to the base part, wherein the movable part is movable between a first position, in which the flexible member (300) is substantially undeformed by the hub assembly, and a second position, in which the flexible member is deformed in order to reduce an area of the air channel (102) blocked by the flexible sheet portion (310), wherein the hub assembly (200) is further configured to selectively form an inner air channel (102) through passages (219, 229) formed in the base part and the movable part, when the flexible member (300) is deformed by the hub assembly (200), wherein the base part (210) comprises one or more openings (217) at least partially forming the inner air channel, wherein the movable part (220) comprises one or more blocking portions (227), and wherein the blocking portions are configured to cover or be at least partially received within the openings (217) in the base part when the flexible member (300) is in an undeformed condition, e.g. when the movable part (220) is in the first position relative to the base part (210).

2. The air vent assembly (100) of claim 1, wherein a frustrum shape of the flexible sheet portion (310) substantially corresponds to a surface of a frustrum, wherein the flexible sheet portion has first and second edges at bases of the frustum shape, wherein the first edge (312) of the flexible sheet portion is coupled to the base part (210) and the second edge (314) of the flexible sheet portion is coupled to the movable part (220) such that moving the movable part relative to the base part acts to pull inwardly on the second edge of the flexible sheet portion, e.g. to collapse the frustrum shape of the flexible sheet portion inwardly, and thereby reduce the area of the air channel (102) blocked by the flexible sheet portion (310).

3. The air vent assembly (100) of claim 2, wherein the movable part (220) is movable in a direction corresponding to a height dimension of the frustrum shape of the flexible sheet portion (310).

4. The air vent assembly (100) of claim 2 or 3, wherein the flexible member (300) comprises a plurality of spoke members (318) having first ends and second ends, wherein the first ends of the spoke members are coupled to the movable part (220) of the hub assembly and the second ends of the spoke members are coupled to the second edge (314) of the flexible sheet portion.

5. The air vent assembly (100) of any of claims 2 to 4, wherein a shape of the second edge (314) corresponds to a cross-sectional shape of the outer boundary of the air channel (102), e.g. when the flexible sheet portion (310) is undeformed.

6. The air vent assembly (100) of any of the preceding claims, wherein the hub assembly (200), e.g. the base part (210), is pivotally mounted within the casing (110), e.g. within the air channel (102).

7. The air vent assembly (100) of any of the preceding claims, wherein the hub assembly (200) and/or the flexible member (300) are configured, e.g. shaped, to adjust a direction in which the air flows through the air channel based on a pivot angle of the hub assembly relative to a principal direction in which the air channel extends.

8. The air vent assembly (100) of claim 7, wherein the air vent assembly further comprises a pin (250) mounted on the casing (110), e.g. within, such as substantially centrally within the air channel (102), wherein the hub assembly (200), e.g. the base part (210), is pivotal relative to the pin about one or more axes perpendicular to the principal direction in which the air channel extends.

9. The air vent assembly (100) of claim 8, wherein the hub assembly (200), e.g. the base part (210), is coupled to the pin (250) by a ball and socket joint configured to permit pivotal movement of the hub assembly (200), e.g. the base part (210), relative to the pin (250) about the one or more axes.

10. The air vent assembly (100) of claim 9, wherein the hub assembly (200) comprises a plurality of passages (219) spaced around, e.g. circumferentially around, the ball and socket joint for forming the inner air channel.

11. The air vent assembly (100) of any of the preceding claims, wherein one of the base part (210) and the movable part (220) comprises a plurality of recesses (226) spaced apart from one another in the direction in which the movable part moves relative to the base part, and the other comprises a projections (212e) configured to be received within one of the recesses (226) in order to locate the movable part (220) relative to the base part (210).

12. The air vent assembly (100) of any of the preceding claims, wherein the base part (210) comprises one or more groves (212b) extending in the direction in which the movable part (220) moves relative to the base part, and wherein the movable part comprises one or more projections (222b) configured to be received within respective ones of the groves.
